# EUROPÄISCHE PATENTSCHRIFT

(11) **EP 3 895 184 B1**
(45) Veröffentlichungstag und Bekanntmachung des Hinweises auf die Patenterteilung: **11.01.2023**
(21) Anmeldenummer: 19816559.9
(22) Anmeldetag: 28.11.2019
(51) Int. Cl.: B01J 45/00, B01J 49/30, B01J 49/50, G21F 9/12, G21F 9/06, G21F 9/30, G21F 9/28

(54) **VERFAHREN ZUR KONDITIONIERUNG VON IONENAUSTAUSCHERHARZEN UND VORRICHTUNG ZUR DURCHFÜHRUNG DES VERFAHRENS**
PROCESS FOR CONDITIONING OF ION EXCHANGE RESINS AND DEVICE THEREFORE
PROCÉDÉ ET INSTALLATION POUR LE CONDITIONNEMENT DES RÉSINES ÉCHANGEUSES

(30) Priorität: 12.12.2018 DE 102018131902
(43) Veröffentlichungstag der Anmeldung: 20.10.2021
(73) Patentinhaber: Framatome GmbH, 91052 Erlangen (DE)
(72) Erfinder: SEYBERT, Gert, 91052 Erlangen (DE); LEHR, Robert, 91052 Erlangen (DE); ZEILER, Bertram, 91052 Erlangen (DE); SCHUBERTH, Philip, 91052 Erlangen (DE); WEISS, Steffen, 91052 Erlangen (DE)
(74) Vertreter: Prinz & Partner mbB
(86) Internationale Anmeldenummer: PCT/EP2019/082826
(87) Internationale Veröffentlichungsnummer: WO 2020/120143

(56) Entgegenhaltungen:
- EP-A1- 1 786 000
- CN-A- 108 231 235

## Beschreibung

### TECHNISCHES GEBIET

Die Erfindung betrifft ein Verfahren zur Konditionierung von verbrauchten lonenaustauschharzen aus kerntechnischen Anlagen sowie eine Vorrichtung zur Konditionierung verbrauchter lonenaustauschharze.

### HINTERGRUND DER ERFINDUNG

lonenaustauscherharze, die in der Regel als etwa kugelförmige Partikel vorliegen, werden beispielsweise beim Betrieb kerntechnischer Anlagen dazu verwendet, das Kühlmittel des Primärsystems, also Wasser, zu reinigen. Ziel dieser Reinigung ist die Vermeidung von nicht gewünschten Ablagerungen auf den Oberflächen der Primärkreiskomponenten, die Vermeidung von Korrosionen sowie die Verminderung des Kontaminationsaufbaus im Primärkreislauf der Anlage. Bei dieser Reinigung werden sowohl saure Kationentauscher als auch basische Anionentauscher eingesetzt, wobei erstere Metallkationen und letztere anionische Verbindungen, beispielsweise Metallkomplexe, zurückhalten. Daneben könen auf den verbrauchten lonenaustauscherharzen auch andere organsiche Stoffe wie Komplexbildner vorliegen.

Da es sich bei einem Teil der Metalle um Radionuklide handelt, sind verbrauchte bzw. beladene Ionenaustauscher radioaktiver Abfall und müssen einer Zwischen- oder Endlagerung zugeführt werden. Radioaktiv kontaminierte lonenaustauscherharze fallen auch bei der Dekontamination kerntechnischer Anlagen, z.B. bei der Primärkreisdekontamination an. Bei einem solchen Verfahren werden an den Oberflächen der Primärkreiskomponenten vorhandene Metalloxidschichten mit Hilfe von Dekontaminationslösungen abgelöst, wobei die Lösungen während oder nach der Dekontamination über Ionenaustauscher geleitet werden, um darin enthaltene Aktivität bzw. Metallkationen zu entfernen.

Zur End-oder Zwischenlagerung müssen kontaminierte Ionenaustauscher, bei denen es sich im Wesentlichen um organische Harze mit sauren oder basischen Gruppen handelt, konditioniert werden. Unter einer Konditionierung ist dabei allgemein die Überführung eines radioaktiven Abfalls in eine lagerungsfähige Form zu verstehen.

Klassischerweise werden lonenaustauscherharze getrocknet und zur dauerhaften Lagerung in eine feste Matrix eingebettet, beispielsweise einzementiert. Dabei wird jedoch ein großes Volumen an fester Matrix benötigt, üblicherweise mehr als das sechsfache des Volumens an lonenaustauscherharz. Dadurch fallen große Mengen an Abfall an, die hohe Kosten in der Zwischen- und Endlagerung verursachen.

Zur Verringerung des Abfallvolumens können die lonenaustauscherharze einer Oxidationsbehandlung unterzogen werden. Der Artikel von R. G. Charman und M. A. Twissell, "Wet oxidation mobile pilot plant demonstration on organic radioactive wastes", European Commission EUR 19064, 1999 beschreibt den derzeitigen industriellen Standard für die Nassoxidation organischer radioaktiver Abfälle. Stand der Technik bei der großtechnischen Anwendung ist hierbei, dass die Zersetzung der lonenaustauscherharze bei der Siedetemperatur von Wasser und Atmosphärendruck, also etwa 100 °C stattfindet. Für die Zersetzung werden vorwiegend 50 %iges Wasserstoffperoxid als Oxidationsmittel, katalytische Mengen von etwa 200 ppm bzw. 0,2 mol/L an Metallionen wie Fe(II) oder Cu(II) sowie ein Antischaummittel eingesetzt, das während der Zersetzung permanent zugegeben werden muss. Während der gesamten Zersetzungsdauer ist das Abdestillieren des Wasservolumens vorgesehen, welches über das Oxidationsmittel eingetragen wird. Die Zugabe von Oxidationsmittel wird linear erhöht bis zu einer maximalen Dosierrate von etwa 35 kg pro Stunde. Der pH-Wert wird zwischen 3,4 und 4 gehalten. Mit dieser Methode lassen sich etwa 95 % des organischen Materials zerstören was einem TOC-Wert (gesamter organischer Kohlenstoff) von etwa 50.000 ppm entspricht. Technische Probleme bzw. erhöhte Risiken bei dieser Technologie sind die Handhabung von 50 %igem Wasserstoffperoxid, die Bildung von radioaktivem Sekundärabfall in Form von radioaktivem Destillat und organischen Stoffen im Destillat, Schaumbildung und ständiges Dosieren von Schauminhibitoren, eine langsame und begrenzte Dosierleistung des Oxidationsmittels, ein ungenügender TOC-Abbau (< 99%) sowie das Risiko einer ungenügenden Reaktionskontrolle

Die EP 2 2 248 134 B1 offenbart ein Verfahren zur Konditionierung eines radioaktiv kontaminierten lonenaustauscherharzes, bei dem dieses mit Wasser vermischt und mit Hilfe eines dem Wasser zugesetzten Oxidationsmittels zumindest teilweise in wasserlösliche Fragmente zerlegt wird. Die dabei entstehende wässrige Lösung wird mit einem Bindemittel, gegebenenfalls nach Konzentration durch Verdampfung von Wasser, verfestigt. Nach der Durchführung dieses Verfahrens verbleibt ein erheblicher Teil der organischen Substanz im zu entsorgenden radioaktiven Abfall. Daher sind die Kosten für die Entsorgung und Lagerung des radioaktiven Abfalls nicht akzeptabel.

Aus der US 4 437 999 A ist ein Verfahren bekannt, bei dem ein unlösliches organisches Material in Form eines organischen Harzes oder einer biologischen Substanz, die kontaminiertes Material enthält, wie beispielsweise radioaktive Abfälle aus einer kerntechnischen Einrichtung oder Abfälle aus der Behandlung von tierischem oder pflanzlichem Gewebe in einem Labor oder einer medizinischen Einrichtung, in einen wasserführenden Behälter eingebracht wird. Während das Wasser bewegt wird, lässt man ultraviolettes Licht und Ozon auf das Material einwirken. Das Ozon oxidiert das organische Harz oder biologische Material, das bei der Oxidation im Wesentlichen in Wasser und Kohlendioxid zerfällt, wobei nach der Behandlung mit UV-Licht und Ozon für einen vorbestimmten Zeitraum im Wesentlichen kein Harz oder biologisches Material zurückbleibt. Das kontaminierte Material kann als Niederschlag oder in Lösung im Restwasser vorliegen oder als Gas entweichen. Dadurch kann das kontaminierte Material in jeder Form vom Wasser zur Entsorgung oder zur weiteren Behandlung getrennt werden. Das in diesem Dokument beschriebene Verfahren ist ein photokatalytisches Nassoxidationsverfahren. Es wird keine Nachbehandlung der wässrigen Lösung durchgeführt, und es werden auch keine Informationen über den TOC-Gehalt des radioaktiven Abfalls angegeben.

Eine alternative Lösung besteht in der vollständigen Oxidation der lonenaustauscherharze durch ein Oxidationsmittel. In der DE 60 2004 003 464 T2 ist ein Verfahren gezeigt, bei dem das lonenaustauscherharz in einer Lösung von Eisen(II)-Sulfat mit Wasserstoffperoxid und hohen Temperaturen zersetzt wird. Anschließend kann eine vollständige Mineralisierung der in der Lösung zurückbleibenden Metallionen erfolgen, indem diese als Metallsalze ausgefällt werden. Das Verfahren umfasst insbesondere die folgenden Schritte:
- Zugabe von lonenaustauscherharzen in eine Lösung von Eisensulfat und Erwärmen der Lösung unter Rühren auf eine Temperatur, die höher als 90° C und niedriger als der Siedepunkt der Lösung ist;
- Zugabe von wässrigem Wasserstoffperoxid in die Lösung und Einstellen des pH-Wertes der resultierenden Mischung mit Schwefelsäure oder Bariumhydroxid auf einen für die Nassoxidation geeigneten pH-Bereich;
- Zugabe von Bariumhydroxid in die Lösung, nach Abschluss der Nassoxidation, um den pH-Wert der Lösung zu erhöhen, und Bildung von Bariumsulfat mit Sulfat in der Lösung, wobei gleichzeitig den Ammoniumionen ermöglicht wird, aus der Lösung als Ammoniumhydroxid oder Ammoniakgas auszutreten; und
- Zugabe eines Verfestigungsmittels zur Bariumsulfataufschlämmung und homogenes Mischen, und danach Stehenlassen der Mischung bis zur Verfestigung.

Da das Verfahren nahe am Siedepunkt der Lösung durchgeführt wird, kommt es zu einer starken Schaumbildung während der Zersetzungsreaktion, die eine industrielle Anwendung erschwert, und/oder es muss ein Schauminhibitor in erheblicher Menge zugegeben werden. Darüber hinaus ist das Verfahren nur im Labormaßstab durchführbar, kann aber nicht industriell eingesetzt werden. Bei hochbeladenen lonenaustauscherharzen, beispielsweise aus einer chemischen Dekontamination, kann auch keine ausreichende Reduktion des TOC erzielt werden, da sich das zur Oxidation eingesetzte Wasserstoffperoxid katalytisch zersetzt. Metallkomplexe können mit diesem Verfahren ebenfalls nicht zuverlässig zersetzt werden.

Die nachfolgend genannten Veröffentlichungen können als technischer Hintergrund für die nasschemische Konditionierung von radioaktiven Abfällen angesehen werden. So beschreibt die JP 2000-065986 A ein Verfahren, mit dem verhindert werden soll, dass Zwischenprodukte einer oxidativen Zersetzungsreaktion in ein Kondensat gelangen und das Kondensat ohne Nachbehandlung wiederverwendet oder freigesetzt werden kann. Das Verfahren umfasst die Umsetzung von radioaktivem organischem Abfall mit Wasserstoffperoxid in Gegenwart von Eisenionen und/oder Kupferionen in einem wässrigen Medium, um den organischen Abfall oxidativ zu zersetzen. Dabei wird eine Mischung aus Dampf und einem Zwischenprodukt, das mindestens eine niedermolekulare organische Säure, Amine, Ammoniak, eine Cyanverbindung und Kohlenwasserstoffe enthält, aus einem Oxidationsreaktionstank entnommen und erwärmt, und dann wird die Mischung zu einer mit einem oxidativen Katalysator ausgestatteten Verbrennungsvorrichtung geleitet. In der Vorrichtung wird Sauerstoff zugeführt, um das Zwischenprodukt sekundär oxidativ zu zersetzen. Das aus der Verbrennungsvorrichtung erhaltene Abgas wird in einem Kondensator gekühlt, um ein harmloses und geruchloses Abgas und ein Kondensat zu erhalten, das kein kohlenstoffhaltiges Material mehr enthält.

Die JP 2003-057395 betrifft ein Entsorgungsverfahren und eine Entsorgungsvorrichtung für radioaktive organische Abfälle, mit denen eine oxidative Zersetzung der radioaktiven organischen Abfälle durchgeführt werden kann. Wenn die Reaktionsgeschwindigkeit der oxidativen Zersetzung der radioaktiven organischen Abfälle durch Wasserstoffperoxid im Reaktionstank ab der Mitte der Reaktionszeit abnimmt, verringert sich auch die Menge der Abgase wie Kohlendioxid, die durch die oxidative Zersetzung der radioaktiven organischen Abfälle entstehen. Ein Abgasdetektor und ein Dampfdetektor überwachen die gebildete Abgasmenge und die erzeugte Dampfmenge und senden Signale an eine Steuervorrichtung, wenn sie eine Abnahme der erzeugten Abgasmenge oder der erzeugten Dampfmenge feststellen. Die Steuervorrichtung veranlasst daraufhin, dass frischer Katalysator in den Reaktionstank zugeführt wird.

In einem Artikel von L. J. Xu, et al., "Treatment of spent radioactive cationic exchange resins used in nuclear power plants by Fenton-like oxidation process", E-Journal of Advanced Maintenance Vol.9-2 (2017) 145-151 werden Fenton- und Fenton-ähnliche Oxidationsprozesse beschrieben, die entwickelt wurden, um verbrauchte radioaktive lonenaustauscherharze aus Kernkraftwerken effektiv zu zersetzen und zu mineralisieren. In dem Artikel wird der Abbau von verbrauchten kationischen Harzen durch ein Fenton-ähnliches Verfahren zur Entfernung des chemischen Sauerstoffbedarfs (CSB) und zur Gewichtsreduzierung des Abfalls untersucht. Insbesondere werden die Auswirkungen der anfänglichen pH-Werte, der Cu²⁺-Konzentration und der H₂O₂-Dosierung auf den Harzabbau betrachtet. Die Ergebnisse zeigten, dass ein niedrigerer anfänglicher pH-Wert der Reaktionslösung eine höhere CSB-Abscheidungsrate mit sich brachte. Mit zunehmender Cu²⁺-Konzentration und H₂O₂-Dosierung stieg die CSB-Entfernungsrate der Harze zunächst an und nahm dann jedoch ab. Die Effizienz der Harzzersetzung (in Bezug auf die CSB-Abbaurate) und die Gewichtsreduktion betrug 99% bzw. 39% bei pH 0,75 und einer Temperatur von 95 °C unter Verwendung einer Reaktionslösung mit 0,2 M Cu²⁺ und 35 mL 30%igem H₂O₂.

In dem Artikel von C. Srinivas, et al., "Management of Spent Organic lon-Exchange Resins by Photochemical Oxidation", WM'03 Konferenz, 23. bis 27. Februar 2003, Tucson, Arizona (USA) ist die Nassoxidation von verbrauchtem lonenaustauscherharz beschrieben, gefolgt von einem Photo-Fenton-Prozess. Der Photo-Fenton-Prozess wurde bei Raumtemperatur durchgeführt und soll nur eine stöchiometrische Menge an Wasserstoffperoxid erfordern, während eine chemische Nassoxidation unter Fenton-Oxidationsbedingungen bei 90-95 °C einen Überschuss an Wasserstoffperoxid von 70-200% erfordert.

Die DE10 2014 002 450 A1 offenbart ein Verfahren zum oxidativen Abbau stickstoffhaltiger Verbindungen im Abwasser einer kerntechnischen Anlage durch eine elektrochemische Behandlung mit einer Diamantelektrode als Anode (A) und einer Kathode (K) als Gegenelektrode. Die Zerstörung der stickstoffhaltigen Verbindungen und eine Reduzierung des Gesamtstickstoffgehalts wird gleichzeitig dadurch erreicht, dass in einer ersten Stufe des Prozesses eine erste Stromdichte an der Anode (A) eingestellt wird, um die stickstoffhaltigen Verbindungen zu oxidieren, und dann eine zweite Stromdichte eingestellt wird, die niedriger ist als die erste Stromdichte, wodurch der gelöste Gesamtstickstoffgehalt durch Freisetzung von molekularem Stickstoff reduziert wird. Es wird auch darauf hingewiesen, dass Diamantelektroden für die Behandlung von Abwasser verwendet werden, um den gesamten organischen Kohlenstoffgehalt (TOC) zu reduzieren. Die Behandlung von verbrauchten lonenaustauscherharzen aus kerntechnischen Anlagen ist in dem Dokument jedoch nicht angesprochen.

### ZUSAMMENFASSUNG DER ERFINDUNG

Aufgabe der Erfindung ist es, eine Möglichkeit zur Konditionierung von verbrauchten lonenaustauscherharzen im industriellen Maßstab bereitzustellen, die kostengünstiger und besser kontrollierbar ist.

Die Aufgabe wird erfindungsgemäß gelöst durch ein Verfahren zur Konditionierung von verbrauchten lonenaustauscherharzen aus kerntechnischen Anlagen, umfassend folgende Schritte:
- Vermischen der verbrauchten lonenaustauscherharze mit Wasser zu einem Reaktionsgemisch;
- Einstellen und Überwachen des pH-Werts des Reaktionsgemisches in einem Bereich von 1,0 bis 3,5, bevorzugt in einem Bereich von 2,0 bis 3,0;
- Hinzufügen eines Oxidationsmittels, bevorzugt einer wässrigen Lösung von Wasserstoffperoxid, zum Reaktionsgemisch, wobei die Temperatur des Reaktionsgemisches bei 90 °C oder weniger, bevorzugt bei 85 °C oder weniger, gehalten wird, sodass das verbrauchte lonenaustauscherharz und das Oxidationsmittel miteinander reagieren, um eine wässrige Reaktionslösung zu bilden, die organische Reaktionsprodukte des verbrauchten lonenaustauscherharzes umfasst; und nachfolgend eine
- Elektrochemische Oxidation der organischen Reaktionsprodukte in der Reaktionslösung mittels einer bordotierten Diamantelektrode, wobei Kohlenstoffdioxid gebildet und eine kohlenstoffabgereicherte, wässrige Reaktionslösung mit einem TOC-Wert (gesamter organischer Kohlenstoff) von weniger als 50 ppm erhalten wird.

Durch die Verwendung mehrerer Oxidationsschritte nacheinander, wobei zunächst das lonenaustauscherharz mit einem Oxidationsmittel in einem nasschemischen Oxidationsschritt umgesetzt wird und die daraus hervorgehenden Reaktionsprodukte in einem zweiten Schritt elektrochemisch oxidiert werden, kann eine nahezu vollständige Umsetzung des lonenaustauscherharzes im industriellen Großmaßstab gewährleistet werden, sodass am Ende eine wässrige Reaktionslösung mit einem TOC-Wert, welcher den Gesamtgehalt an organischem Kohlenstoff in der Lösung angibt, von weniger als 50 ppm erhalten wird.

Die vollständige Mineralisierung der lonenaustauscherharze stellt eine ausgezeichnete Möglichkeit dar, das radioaktive Abfallvolumen zu reduzieren, organische Komplexbildner und Metallkomplexe zu zerstören und einen nahezu kohlenstofffreien radioaktiven Abfall zur Endlagerung zu erhalten. Zusätzlich wird der erste Oxidationsschritt bei einer niedrigen Temperatur von 90 °C oder weniger, bevorzugt bei 85 °C oder weniger, durchgeführt. Da Wasser als Lösungsmittel benutzt wird, siedet die Reaktionsmischung bei diesen niedrigen Temperaturen nicht. Dadurch wird Schaumbildung, auch während der exothermen Reaktion der organischen lonenaustauscherharze mit Wasserstoffperoxid, deutlich minimiert. Dies ermöglicht eine kontrollierte Prozessführung, und der Einsatz von Schauminhibitoren kann deutlich reduziert bzw. es kann komplett auf den Einsatz von Schauminhibitoren verzichtet werden. Dadurch wird auch die Menge an Sekundärabfall reduziert.

Durch die kontrollierte Reaktionsführung wird das Risiko von Prozessunterbrechungen vermindert, sodass das Verfahren mit weniger Unterbrechungen und somit wirtschaftlicher betrieben werden kann.

Des Weiteren sorgen die niedrigen Reaktionstemperaturen dafür, dass das Oxidationsmittel, insbesondere eine wässrige Lösung von Wasserstoffperoxid, weniger Selbstzersetzung zeigt. Dadurch wird eine geringere Menge des Oxidationsmittels zur vollständigen Zersetzung der lonenaustauscherharze benötigt.

Durch die Verwendung eines mehrstufigen Oxidationsverfahrens können die beiden Teilschritte des Oxidationsvorgangs prozesstechnisch voneinander getrennt werden. Dadurch wird eine höhere Auslastung einer entsprechenden Anlage zur Konditionierung verbrauchter lonenaustauscherharze ermöglicht.

Die lonenaustauscherharze können ferner organische Komplexbildner, beispielsweise in freier Form oder in Form von an die lonenaustauscherharte gebundenen Metallkomplexen, sowie weitere organische Stoffe enthalten. Insbesondere organische Komplexbildner können in immobilisiertem Abfall, beispielsweise in Beton, als Chelatbildner für radioaktive Stoffe dienen und so deren Mobilität erhöhen. Auch können sich einige organische Substanzklassen negativ auf die Festigkeit des Betons auswirken. Dadurch wird die Langzeitstabilität des verfestigten Abfalls reduziert, wodurch die Gefahr einer Grundwasserkontamination in der Zwischen- und/oder Endlagerung größer wird. Daher ist das erfindungsgemäße Verfahren bevorzugt dafür ausgelegt, verbrauchte lonenaustauscherharze zu konditionieren, in denen auch weitere organische Verbindungen, insbesondere organische Komplexbildner, enthalten sind.

Das Reaktionsgemisch zur nasschemischen Oxidation kann Wasser und verbrauchtes lonenaustauscherharz in einem Volumenverhältnis von 3:1 bis 1,5:1, bevorzugt von 2,5:1 bis 2:1 und besonders bevorzugt von etwa 2:1, umfassen. Da auch hohe Volumenverhältnisse von Wasser zu lonenaustauscherharz verwendet werden können, kann das lonenaustauscherharz bereits mit Wasser in das Reaktionsgefäß überführt werden, ohne dass überschüssiges Wasser in größerer Menge vor der nasschemischen Oxidation entfernt werden müsste. Ein zu geringes Volumenverhältnis führt zu einem stärkeren Schäumen und einer schwierigen Kontrollierbarkeit der Zersetzungsreaktion, und ein höheres Volumenverhältnis zu einer Verringerung der Ansatzgröße.

Bevorzugt wird die Temperatur des Reaktionsgemisches in einem Bereich von 60 bis 90 °C, bevorzugt von 70 bis 85 °C und besonders bevorzugt in einem Bereich von 70 bis 80 °C gehalten. Dadurch kann zum einen eine ausreichend hohe Temperaturfür einen raschen Reaktionsverlauf ausgenutzt und zum anderen die Schaumbildung unterbunden werden. Zugleich begrenzt eine niedrigere Temperatur die Selbstoxidation des Oxidationsmittels, insbesondere im Fall einer wässrigen Lösung von Wasserstoffperoxid als Oxidationsmittel, sodass ein geringerer Überschuss an Oxidationsmittel verwendet werden kann.

Da die Zersetzungsreaktion stark exotherm ist, kann das Reaktionsgefäß an einen Wärme-Kühlkreislauf angeschlossen sein. Dadurch kann je nach Bedarf das Reaktionsgemisch erhitzt oder gekühlt werden, um die Temperatur des Reaktionsgemisches stabil zu halten. Bei kontrollierter Reaktionsführung kann auch ausschließlich durch die Reaktionswärme die gewünschte Temperatur eingestellt werden, zumindest zu Anfang der Oxidationsreaktion.

Der pH-Wert des Reaktionsgemisches kann eingestellt und kontrolliert werden durch Zugabe einer Mineralsäure, bevorzugt Schwefelsäure oder Salpetersäure, oder einer Base, bevorzugt einem Alkalihydroxid, beispielsweise in Form von Natronlauge, oder Erdalkalihydroxiden. Dadurch kann der pH-Wert des Reaktionsgemisches in einem Bereich von 1,0 bis 3,5, bevorzugt in einem Bereich von 2,0 bis 3,0, eingestellt und stetig nachjustiert werden. Bei einem pH-Wert des Reaktionsgemischs von über 3,5 besteht die Gefahr, dass die im Reaktionsgemisch gelösten Eisensalze oder ein wahlweise zugegebener Katalysator ausfallen. Bei pH-Werten unterhalb von 1,0 bis 2,0 kann das Verfahren aufgrund der deutlich geringeren Reaktionsgeschwindigkeit nicht mehr wirtschaftlich durchgeführt werden.

Als Oxidationsmittel kann eine wässrige Lösung von Wasserstoffperoxid in einer Konzentration von 30 bis 35 Gewichtsprozent genutzt werden. Die Reaktion mit Wasserstoffperoxid ist stark exotherm, wodurch bereits über die Reaktionswärme die gewünschte Reaktionstemperatur erreicht und gehalten werden kann. Gleichzeitig ist es vorteilhaft, keine höher konzentrierten Lösungen mit mehr als 40 Gewichtsprozent von Wasserstoffperoxid zu Beginn der Reaktion zu nutzen, da die Reaktion dann schwieriger zu kontrollieren wäre. Gemäß einer bevorzugten Ausführungsform ist vorgesehen, dass zu Anfang der Oxidationsreaktion, bevorzugt über mindestens die Hälfte der Reaktionszeit, eine niedriger konzentrierte Lösung mit 30 bis 35 Gewichtsprozent an Wasserstoffperoxid genutzt wird und, nachdem sich die Temperatur des Reaktionsgemisches stabilisiert hat, eine höher konzentrierte Lösung, beispielsweise mit bis zu 50 Gewichtsprozent Wasserstoffperoxid, eingesetzt wird. Auf diese Weise kann ein geringeres Volumen an Oxidationsmittel zugegeben werden.

Eine wässrige Lösung von Wasserstoffperoxid als Oxidationsmittel wird vorteilhafterweise so zum Reaktionsgemisch hinzugefügt, dass die Konzentration von Wasserstoffperoxid im Reaktionsgemisch wenigstens 20.000 ppm beträgt. Auf diese Weise wird gewährleistet, dass eine ausreichend hohe Konzentration zur vollständigen Zersetzung des verbrauchten lonenaustauscherharzes vorliegt.

In einer bevorzugten Ausführungsform wird kein Schauminhibitor zum Reaktionsgemisch zugegeben. Dies spart die Kosten für den Schauminhibitor sowie den zusätzlichen Dosieraufwand ein.

Die Zugabe des Oxidationsmittels kann beendet und die elektrochemische Oxidation gestartet werden, wenn die wässrige Reaktionslösung zu einer klaren und vorzugsweise durchsichtigen Lösung wird. An diesem Punkt hat sich das ursprüngliche lonenaustauscherharz vollständig zu löslichen, niedermolekularen organischen Verbindungen zersetzt, sodass keine größeren Partikel des lonenaustauscherharzes die Elektroden im folgenden elektrochemischen Oxidationsschritt blockieren können. Zugleich kann der Punkt, an dem das lonenaustauscherharz vollständig zersetzt wurde, auf diese Weise einfach bestimmt werden. Im Gegensatz zur photokatalytischen Zersetzung muss für die elektrochemische Oxidation aber keine transparente, durchstrahlbare Lösung vorliegen.

Die nasschemische Oxidation einer Charge von 100 bis 500 L eines organischen lonenaustauscherharzes ist üblicherweise innerhalb von 8 Stunden abgeschlossen und benötigt etwa das zehn- bis zwanzigfache Volumen an 35-prozentiger Wasserstoffperoxidlösung im Vergleich zum vorgelegten Volumen des lonenaustauscherharzes. Das Volumen des Reaktionsgefäßes muss entsprechend groß ausgelegt sein. An diesem Punkt des Verfahrens ist bereits der TOC-Wert in der Reaktionslösung erniedrigt. Die Erfinder haben jedoch erkannt, dass eine Reduzierung des Kohlenstoffgehaltes durch nasschemische Oxidation mit Wasserstoffperoxid nicht beliebig weit durchgeführt werden kann. Ein möglichst niedriger TOC-Wert ist jedoch wünschenswert, da organische Bestandteile im letztlich erhaltenen radioaktiven Abfall radiolysieren und dessen Lagerstabilität negativ beeinflussen können.

Daher wird an die nasschemische Oxidation mit Wasserstoffperoxid erfindungsgemäß eine elektrochemische Oxidation angeschlossen, welche mittels einer bordotierten Diamantelektrode durchgeführt wird, bevorzugt bei einer Spannung von 5 V oder weniger. Eine bordotierte Diamantelektrode kann Hydroxyl-Radikale aus Wasser erzeugen, welche zur weiteren Oxidation der organischen Reaktionsprodukte aus der nasschemischen Oxidation genutzt werden können. Eine Zugabe von zusätzlichem Oxidationsmittel ist während der elektrochemischen Oxidation nicht erforderlich und erfindungsgemäß nicht vorgesehen. Gleichzeitig ermöglicht die elektrochemische Oxidation die Anwendung relativ großer Überspannungen, welche benötigt werden, um Kohlenstoffdioxid als gasförmiges Reaktionsprodukt an der Elektrode zu erzeugen. Die Überspannung sollte jedoch nicht zu hoch gewählt werden, da ansonsten die elektrolytische Wasserspaltung in Wasserstoff und Sauerstoff auftreten kann, wodurch unkontrollierte Knallgasreaktionen ermöglicht würden.

Die Entkopplung der Zersetzung der lonenaustauscherharze durch nasschemischen Oxidation und der TOC-Reduzierung durch elektrochemische Oxidation kann ferner die zur Durchführung des Verfahrens benötigte Zeit deutlich reduziert werden. Außerdem lassen sich auch hochbeladene lonenaustauscherharze durch die elektrochemische Oxidation zuverlässig konditionieren.

Vorteilhafterweise wird vor der elektrochemischen Oxidation das durch die Zugabe von Wasserstoffperoxid eingetragene Wasser aus dem Reaktionsgemisch und/oder der wässrigen Reaktionslösung mittels Vakuumdestillation aus dem Reaktionsgefäß entfernt. Die Vakuumdestillation kann vorzugsweise bereits während der nasschemischen Oxidation mit Wasserstoffperoxid durchgeführt werden. Dadurch wird das Reaktionsvolumen für die elektrochemische Oxidation verringert, wodurch der für die elektrochemische Oxidation zu benutzende Reaktor kleiner ausgelegt werden kann.

Zugleich dient die Vakuumdestillation zum Entfernen des bereits entstandenen Kohlenstoffdioxids und anderen, unbedenklichen gasförmigen Reaktionsprodukten. Dabei kann zusätzlich ein Schwebstofffilter vorgesehen sein, der das abgesaugte Gas reinigt. Mittels Vakuumdestillation lässt sich im Vergleich zu einer Destillation bei Atmosphärendruck ein höherer Durchsatz erzeugen, wodurch der entsprechende Prozessschritt verkürzt werden kann.

Durch die Vakuumdestillation werden neben dem Wasser des Reaktionsgemisches und/oder der wässrigen Reaktionslösung auch leichtflüchtige organische Stoffe verdampft. Da diese jedoch zumindest teilweise weiter bis zu Kohlenstoffdioxid zersetzt werden sollen, ist es vorteilhaft, diese in einem Kreislaufprozess dem Reaktionsgemisch und/oder der Reaktionslösung wieder zuzuführen. Daher kann das mittels Vakuumdestillation entfernte Wasser zusätzlich mittels Umkehrosmose gereinigt werden, um flüchtige organische Stoffe abzutrennen und diese dem Reaktionsgemisch und/oder der wässrigen Reaktionslösung wieder zuzuführen. Gleichzeitig kann das abdestillierte Wasser gereinigt aus der Umkehrosmose erhalten und anschließend entsorgt werden.

Gegenstand der Erfindung ist ferner eine Vorrichtung zur Konditionierung verbrauchter lonenaustauscherharze, umfassend
- ein Reaktionsgefäß zur Aufnahme verbrauchter lonenaustauscherharze und Wasser;
- eine Oxidationsmittelzufuhr, die mit dem Reaktionsgefäß verbunden ist;
- eine Vakuumdestillationseinheit umfassend eine Sprühkolonne, die mit dem Reaktionsgefäß und einem Kondensator verbunden ist, und
- eine Einheit zur elektrochemischen Oxidation, die innerhalb des Reaktionsgefäßes angeordnet oder mit diesem verbunden ist, wobei die Einheit zur elektrochemischen Oxidation eine bordotierte Diamantelektrode aufweist.

Im Reaktionsgefäß kann die nasschemische Oxidation stattfinden, wobei das Oxidationsmittel, insbesondere eine wässrige Lösung von Wasserstoffperoxid, mittels der Oxidationsmittelzufuhr dosiert werden kann. Mittels einer Vakuumdestillationseinheit kann, auch bereits während der nasschemischen Oxidation, überschüssiges Wasser sowie gasförmige Reaktionsprodukte aus dem Reaktionsgemisch und/oder der Reaktionslösung entfernt werden.

Das Reaktionsgefäß ist dazu ausgelegt, eine Charge von lonenaustauscherharz aus dem Kühlmittelaufbereitungssystem einer kerntechnischen Anlage oder einer Dekontaminationsvorrichtung aufzunehmen. Typischerweise werden Volumina von 100 bis 500 L an lonenaustauscherharzen verarbeitet. Insbesondere die Abfälle aus der Dekontamination von kerntechnischen Anlagen können stark mit organischen Komplexbildnern und anderen organischen Stoffen beladen sein.

Eine Sprühkolonne ermöglicht es, leichtflüchtige organische Stoffe, die durch die Vakuumdestillation zusammen mit dem Wasser verdampft wurden, zur weiteren Reaktion in einem Kreislaufprozess wieder in das Reaktionsgemisch und/oder die Reaktionslösung zurückzuführen, nachdem sie im Kondensator wieder verflüssigt wurden.

Eine Einheit zur elektrochemischen Oxidation, die eine bordotierte Diamantelektrode aufweist und innerhalb des Reaktionsgefäßes angeordnet oder mit diesem verbunden ist, kann nach der nasschemischen Oxidation die erhaltene wässrige Reaktionslösung in einem zweiten Schritt elektrochemisch oxidieren, sodass eine wässrige Reaktionslösung mit einem Gesamtkohlenstoffgehalt (TOC-Wert) von weniger als 50 ppm erhalten werden kann.

Die Vorrichtung weist vorteilhafterweise zusätzlich eine Umkehrosmoseeinheit auf, die mit dem Kondensator verbunden ist. Auf diese Weise werden flüchtige organische Stoffe, die zusammen mit dem Wasser abdestilliert wurden, im Kondensator wieder verflüssigt, und können anschließend über die Umkehrosmoseeinheit aus dem Wasser entfernt und in das Reaktionsgemisch und/oder die Reaktionslösung zurückgeführt werden, während gleichzeitig das abdestillierte Wasser entfernt werden kann.

Die Einheit zur elektrochemischen Oxidation kann einen Reaktor und eine bordotierte Diamantelektrode umfassen, wobei der Reaktor mit dem Reaktionsgefäß verbunden und die bordotierte Diamantelektrode in dem Reaktor angeordnet ist. Auf diese Weise kann die wässrige Reaktionslösung, welche aus der nasschemischen Oxidation erhalten wird, in den Reaktor überführt und anschließend mittels der bordotierten Diamantelektrode elektrochemisch weiter behandelt werden.

Die Bereitstellung eines Reaktors für die elektrochemische Oxidation zusätzlich zum Reaktionsgefäß für die nasschemische Oxidation kann zur prozesstechnischen Trennung der beiden Verfahrensschritte genutzt werden. Dadurch wird ein besonders wirtschaftlicher Betrieb der Vorrichtung ermöglicht.

Grundsätzlich kann die Elektrode jedoch auch in dem Reaktionsgefäß angeordnet sein, sodass kein eigener Reaktor für die elektrochemische Oxidation benötigt wird.

### BESCHREIBUNG DER ZEICHNUNG

In der beigefügten Zeichnung zeigt:

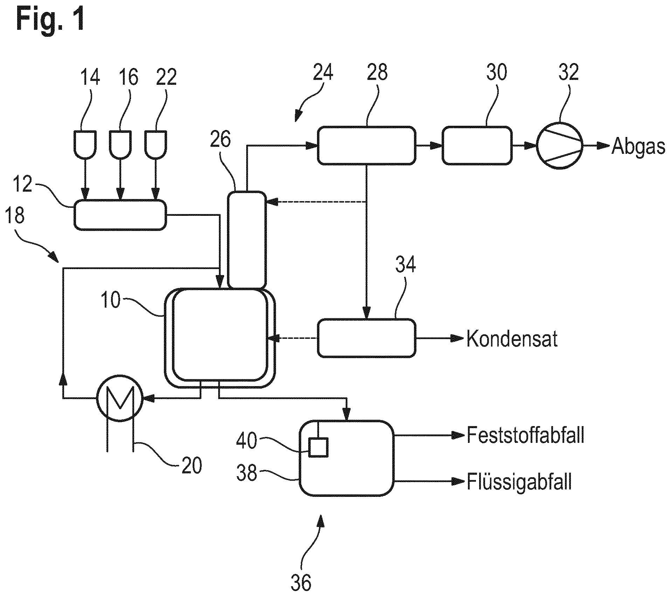

- Figur 1 ein Schema einer Vorrichtung zur Durchführung des erfindungsgemäßen Verfahrens.

### AUSFÜHRLICHE BESCHREIBUNG BEVORZUGTER AUSFÜHRUNGSFORMEN

Weitere Vorteile und Eigenschaften der Erfindung ergeben sich aus der nachfolgenden Beschreibung einer bevorzugten Ausführungsform und der Zeichnung, auf die Bezug genommen wird. Diese sollen jedoch nicht in einem einschränkenden Sinn verstanden werden.

Die einzige Zeichnungsfigur zeigt ein Reaktionsgefäß 10, in das mittels einer Dosiereinheit 12 verbrauchtes lonenaustauscherharz zusammen mit Wasser dosiert wird, um ein Reaktionsgemisch innerhalb des Reaktionsgefäßes 10 zu erhalten. Das verbrauchte lonenaustauscherharz kann insbesondere organische Komplexbildner enthalten. An die Dosiereinheit 12 kann ein erster Vorratsbehälter 14 mit verbrauchtem lonenaustauscherharz und ein zweiter Vorratsbehälter 16 mit Wasser angeschlossen sein. Das erhaltene Reaktionsgemisch wird mittels eines Rührers stetig gerührt.

Das Volumenverhältnis zwischen Wasser und lonenaustauscherharz beträgt im vorgelegten Reaktionsgemisch vorteilhafterweise etwa 2:1, weiter bevorzugt zwischen etwa 3:1 und 1,5:1.

Das Reaktionsgefäß 10 ist an einen Wärme-Kühlkreislauf 18 mit einem Wärmetauscher 20 angeschlossen. Das Reaktionsgefäß 10 liegt vorteilhaft als doppelwandiges Reaktionsgefäß 10 vor, wobei innerhalb der Doppelwand ein Kühlmittel des Wärme-Kühlkreislaufs 18 geführt wird.

Zum Reaktionsgemisch innerhalb des Reaktionsgefäßes 10 kann als Katalysator eine geringe Menge eines Eisen(II)- oder Kupfer(II)-Salzes hinzugefügt werden, beispielsweise in einer Menge von 200 ppm.

Der pH-Wert des Reaktionsgemisches wird mittels einer Mineralsäure, beispielsweise Schwefel- oder Salpetersäure, und/oder einer Base, beispielsweise Natronlauge, auf einen Wert von 2,5 bis 3 eingestellt und stetig kontrolliert.

Anschließend wird damit begonnen, mittels der Dosiereinheit 12 aus einer Oxidationsmittelzufuhr 22 ein Oxidationsmittel zum Reaktionsgemisch hinzuzufügen.

Im Folgenden dient eine wässrige Lösung von Wasserstoffperoxid als Oxidationsmittel, wobei grundsätzlich auch andere Oxidationsmittel benutzt werden können, wie beispielsweise Ozon.

Zunächst wird eine wässrige Lösung von Wasserstoffperoxid mit 35 Gewichtsprozent Wasserstoffperoxid zum Reaktionsgemisch hinzugegeben. Dabei wird mit einer Dosiergeschwindigkeit von beispielsweise 200 g Lösung pro Liter lonenaustauscherharz und Stunde begonnen. Die Dosiergeschwindigkeit kann nach Einstellen eines Gleichgewichts stetig erhöht werden. Nachdem etwa die Hälfte des benötigten Wasserstoffperoxids zugegeben wurde, kann dessen Konzentration in der Oxidationslösung auf bis zu 50 Gewichtsprozent Wasserstoffperoxid erhöht werden.

Die Temperatur des Reaktionsgemisches wird dabei auf 60 bis 90 °C, bevorzugt auf 70 bis 80 °C, eingestellt. Jedoch soll verhindert werden, dass das Reaktionsgemisch siedet, sodass keine oder nur eine geringe Schaumbildung während der nasschemischen Oxidation des lonenaustauscherharzes auftritt, und somit auf die Zugabe eines Schauminhibitors verzichtet werden kann. Grundsätzlich könnte jedoch auch über die Dosiereinheit 12 zusätzlich ein Schauminhibitor bei Bedarf zugesetzt werden.

Das Erwärmen auf die Reaktionstemperatur kann ausschließlich aufgrund der durch die exotherme Reaktion entstehende Wärme erfolgen und nach Erreichen der gewünschten Reaktionstemperatur mittels des Wärme-Kühlkreislaufs 18 kontrolliert werden.

Das Reaktionsgefäß 10 wird so groß ausgelegt, dass alle benötigten Volumina aufgenommen werden können. Bei Verwenden einer wässrigen Lösung von Wasserstoffperoxid mit einem Gehalt von 35 Gewichtsprozent Wasserstoffperoxid muss etwa das zehn- bis zwanzigfache Volumen des vorgelegten lonenaustauscherharzes zugegeben werden.

Die nasschemische Oxidation wird fortgesetzt, bis das Reaktionsgemisch zu einer transparenten und klaren Reaktionslösung wird. An diesem Punkt ist das ursprünglich vorgelegte lonenaustauscherharz vollständig zu niedermolekularen, löslichen organischen Stoffen zersetzt worden. Die nasschemische Oxidation benötigt dafür etwa 8 Stunden.

Nach der nasschemischen Oxidation beträgt der TOC-Wert der Reaktionslösung vorzugsweise höchstens 100 g/L oder weniger, bevorzugt höchstens 75 g/L und besonders bevorzugt höchstens 50 g/L.

Am Reaktionsgefäß 10 ist eine Vakuumdestillationseinheit 24 angeschlossen, umfassend eine Sprühkolonne 26, die mit dem Reaktionsgefäß 10 und einem Kondensator 28 verbunden ist, sowie einen Schwebstofffilter 30, der zwischen dem Kondensator 28 und einer Vakuumpumpe 32 angeordnet ist. Die Vakuumdestillationseinheit 24 kann bereits während der nasschemischen Oxidation betrieben werden.

Der aufsteigende Dampf aus dem Reaktionsgemisch und/oder der Reaktionslösung enthält Wasser, Sauerstoff, Kohlenstoffdioxid sowie leichtflüchtige organische Verbindungen. Letztere können bereits teilweise durch eine Rektifikation innerhalb der Sprühkolonne 26 wieder kondensieren und in das Reaktionsgefäß 10 zurückfließen.

Das Wasser und die leichtflüchtigen organischen Verbindungen kondensieren, nachdem sie vollständig durch die Sprühkolonne 26 hindurch aufgestiegen sind, anschließend im Kondensator 28 wieder aus, während der Sauerstoff und das Kohlenstoffdioxid über die Vakuumpumpe 32 abgesaugt werden.

Zusätzlich kann ein Schwebstofffilter 30, beispielsweise ein HEPA-Filter, zur Reinigung des Abgases vorgesehen sein, um zu verhindern das zusammen mit dem Sauerstoff und dem Kohlenstoffdioxid weitere Bestandteile Dampfes abgesaugt werden.

Das erhaltene Kondensat kann aus dem Kondensator 28 über die Sprühkolonne 26 wieder in das Reaktionsgefäß 10 zurückgeführt werden.

Des Weiteren kann eine Umkehrosmoseeinheit 34 vorgesehen sein, welche mit dem Kondensator 28 und dem Reaktionsgefäß 10 verbunden ist. Das aus dem Kondensator 28 erhaltene Kondensat kann mithilfe der Umkehrosmoseeinheit 34 aufgereinigt werden. Dabei werden noch enthaltene flüchtige organische Verbindungen mittels Umkehrosmose aus dem Kondensat entfernt und in das Reaktionsgefäß 10 zurückgeführt. Das aufgereinigte Kondensat kann anschließend entsorgt werden, sodass das Gesamtvolumen des Reaktionsgemisches und/oder der Reaktionslösung im Reaktionsgefäß 10 verringert werden kann.

Die erhaltene Reaktionslösung aus der nasschemischen Oxidation wird anschließend in eine Einheit zur elektrochemischen Oxidation 36, welche einen Reaktor 38 sowie eine bordotierte Diamantelektrode 40 umfasst, überführt.

In einer alternativen Ausführungsform ist es möglich, dass die Einheit zur elektrochemischen Oxidation 36 mit dem Reaktor 38 und der bordotierten Diamantelektrode 40 innerhalb des Reaktionsgefäßes 10 angeordnet ist. Dadurch muss die nach der nasschemischen Oxidation erhaltene Reaktionslösung nicht in einen eigenen Reaktor 38 überführt werden.

Die organischen Reaktionsprodukte aus der nasschemischen Oxidation werden innerhalb des Reaktors 38 elektrochemisch oxidiert. Dafür wird bevorzugt eine Spannung von etwa 5 V an der bordotierten Diamantelektrode 40 angelegt und mit einer Stromstärke von etwa 200 mA/cm² gearbeitet. Bei der elektrochemischen Oxidation wird aus den organischen Reaktionsprodukten der nasschemischen Oxidation Kohlenstoffdioxid gebildet und eine kohlenstoffabgereicherte, wässrige Reaktionslösung mit einem finalen Gesamtkohlenstoffgehalt (TOC-Wert) von weniger als 50 ppm erhalten.

Die bordotierte Diamantelektrode 40 weist eine aktive Fläche von mindestens etwa 1 m² auf. Bevorzugt wird eine bordotierte Diamantelektrode 40 mit einer aktiven Fläche von bis zu 5 m² genutzt. Je größer die aktive Fläche der bordotierten Diamantelektrode 40 gewählt wird, desto schneller kann die elektrochemische Oxidation abgeschlossen werden. Bevorzugt ist die bordotierte Diamantelektrode 40 eine Gitterelektrode.

Die elektrochemische Oxidation benötigt unter idealen Bedingungen etwa 8 Stunden, sodass das gesamte Verfahren in etwa 16 Stunden abgeschlossen werden kann. Wenn der Reaktor 38 unabhängig vom Reaktionsgefäß 10 betrieben wird, ist es möglich, dass bereits eine nasschemische Oxidation mit einem nächsten Batch an lonenaustauscherharz im Reaktionsgefäß 10 durchgeführt wird, während die elektrochemische Oxidation des vorherigen Ansatzes innerhalb des Reaktors 38 erfolgt. Durch diese parallele Verfahrensweise kann die Vorrichtung stärker ausgelastet und somit wirtschaftlicher betrieben werden.

Die kohlenstoffabgereicherte Reaktionslösung kann anschließend einer Nachbehandlung zugeführt werden, in der die enthaltenen radioaktiven Metalle als Feststoffabfall mit geringem Volumen erhalten werden können. Dazu können die Metalle beispielsweise ausgefällt und das überschüssige Wasser abdestilliert werden. Alternativ kann das überschüssige Wasser direkt für die Zementierung der kohlenstoffabgereicherten Reaktionslösung eingesetzt werden, welche die radioaktiven Metalle enthält. Insgesamt lässt sich durch das Verfahren eine Abfallvolumenreduzierung im Vergleich zur direkten Zementierung des lonenaustauscherharzes um einen Faktor 5 bis 20 erzielen. Der so erhaltene radioaktive Abfall ist nahezu kohlenstofffrei, insbesondere frei von organischen Komplexbildnern, und damit lagerstabil.

## Patentansprüche

1. Verfahren zur Konditionierung von verbrauchten lonenaustauscherharzen aus kerntechnischen Anlagen, umfassend folgende Schritte:
- Vermischen der verbrauchten lonenaustauscherharze mit Wasser zu einem Reaktionsgemisch;
- Einstellen und Überwachen des pH-Werts des Reaktionsgemisches in einem Bereich von 1,0 bis 3,5, bevorzugt in einem Bereich von 2,0 bis 3,0;
- Hinzufügen eines Oxidationsmittels, bevorzugt einer wässrigen Lösung von Wasserstoffperoxid, zum Reaktionsgemisch, wobei die Temperatur des Reaktionsgemisches bei 90 °C oder weniger, bevorzugt bei 85 °C oder weniger, gehalten wird, sodass das verbrauchte lonenaustauscherharz und das Oxidationsmittel miteinander reagieren, um eine wässrige Reaktionslösung zu bilden, die organische Reaktionsprodukte des verbrauchten lonenaustauscherharzes umfasst; und nachfolgend eine
- Elektrochemische Oxidation der organischen Reaktionsprodukte in der Reaktionslösung mittels einer bordotierten Diamantelektrode (40), wobei Kohlenstoffdioxid gebildet und eine kohlenstoffabgereicherte, wässrige Reaktionslösung mit einem TOC-Wert (gesamter organischer Kohlenstoff) von weniger als 50 ppm erhalten wird.

2. Verfahren nach Anspruch 1, **dadurch gekennzeichnet, dass** die lonenaustauscherharze organische Komplexbildner enthalten.

3. Verfahren nach Anspruch 1 oder 2, **dadurch gekennzeichnet, dass** das Reaktionsgemisch Wasser und verbrauchtes lonenaustauscherharz in einem Volumenverhältnis von 3:1 bis 1,5:1, bevorzugt von 2,5:1 bis 2:1 und besonders bevorzugt von 2:1, umfasst.

4. Verfahren nach einem der vorhergehenden Ansprüche, **dadurch gekennzeichnet, dass** die Temperatur des Reaktionsgemisches in einem Bereich von 60 bis 90 °C, bevorzugt von 70 bis 85 °C und besonders bevorzugt in einem Bereich von 70 bis 80 °C gehalten wird.

5. Verfahren nach einem der vorherigen Ansprüche, **dadurch gekennzeichnet, dass** der pH-Wert des Reaktionsgemisches eingestellt und kontrolliert wird durch Zugabe einer Mineralsäure, bevorzugt Schwefelsäure oder Salpetersäure, oder einer Base, bevorzugt einem Alkalihydroxid oder Erdalkalihydroxid.

6. Verfahren nach einem der vorhergehenden Ansprüche, **dadurch gekennzeichnet, dass** das Oxidationsmittel eine wässrige Lösung von Wasserstoffperoxid in einer Konzentration von 30 bis 35 Gewichtsprozent ist.

7. Verfahren nach einem der vorhergehenden Ansprüche, **dadurch gekennzeichnet, dass** Wasserstoffperoxid zum Reaktionsgemisch hinzugefügt wird, sodass die Konzentration von Wasserstoffperoxid im Reaktionsgemisch wenigstens 20.000 ppm beträgt.

8. Verfahren nach einem der vorhergehenden Ansprüche, **dadurch gekennzeichnet, dass** kein Schauminhibitor zum Reaktionsgemisch zugegeben wird.

9. Verfahren nach einem der vorhergehenden Ansprüche, **dadurch gekennzeichnet, dass** die Zugabe des Oxidationsmittels beendet und die elektrochemische Oxidation gestartet wird, wenn die wässrige Reaktionslösung eine klare und transparente Lösung wird.

10. Verfahren nach einem der vorhergehenden Ansprüche, **dadurch gekennzeichnet, dass** die elektrochemische Oxidation bei einer Spannung von 5 V oder weniger durchgeführt wird.

11. Verfahren nach einem der vorhergehenden Ansprüche, **dadurch gekennzeichnet, dass** vor der elektrochemischen Oxidation Wasser aus dem Reaktionsgemisch und/oder der wässrigen Reaktionslösung mittels Vakuumdestillation aus dem Reaktionsgefäß entfernt wird.

12. Verfahren nach Anspruch 11, **dadurch gekennzeichnet, dass** das mittels Vakuumdestillation entfernte Wasser mittels Umkehrosmose gereinigt wird, um flüchtige organische Stoffe zu erhalten, und die flüchtigen organischen Stoffe dem Reaktionsgemisch und/oder der wässrigen Reaktionslösung wieder zugeführt werden.

13. Vorrichtung zur Konditionierung verbrauchter lonenaustauscherharze, umfassend
- ein Reaktionsgefäß (10) zur Aufnahme der verbrauchten lonenaustauscherharze und Wasser;
- eine Oxidationsmittelzufuhr (22), die mit dem Reaktionsgefäß (10) verbunden ist;
- eine Vakuumdestillationseinheit (24) umfassend eine Sprühkolonne (26), die mit dem Reaktionsgefäß (10) und einem Kondensator (28) verbunden ist, und
- eine Einheit zur elektrochemischen Oxidation (36), die innerhalb des Reaktionsgefäßes (10) angeordnet oder mit diesem verbunden ist, wobei die Einheit zur elektrochemischen Oxidation (36) eine bordotierte Diamantelektrode (40) aufweist.

14. Vorrichtung nach Anspruch 13, **dadurch gekennzeichnet, dass** der Kondensator (28) mit einer Umkehrosmoseeinheit (34) verbunden ist.

15. Vorrichtung nach Anspruch 13 oder 14, **dadurch gekennzeichnet, dass** die Einheit zur elektrochemischen Oxidation (36) einen Reaktor (38) und eine bordotierte Diamantelektrode (40) umfasst, wobei der Reaktor (38) mit dem Reaktionsgefäß (10) verbunden und die bordotierte Diamantelektrode (40) in dem Reaktor (38) angeordnet ist.

## Claims

1. A method for conditioning of spent ion exchange resins from nuclear facilities, comprising the steps of:
- mixing the spent ion exchange resins with water to form a reaction mixture;
- setting and monitoring the pH of the reaction mixture in a range from 1.0 to 3.5, preferably in a range from 2.0 to 3.0;
- adding an oxidant, preferably an aqueous solution of hydrogen peroxide, to the reaction mixture, with the temperature of the reaction mixture being maintained at 90 °C or less, preferably at 85 °C or less, so that the spent ion exchange resin and the oxidant react with each other to form an aqueous reaction solution comprising organic reaction products of the spent ion exchange resin; and subsequently
- electrochemically oxidizing the organic reaction products in the reaction solution by means of a boron-doped diamond electrode (40), wherein carbon dioxide is produced and a carbon-depleted aqueous reaction solution having a TOC (total organic carbon) value of less than 50 ppm is obtained.

2. The method according to claim 1, **characterized in that** the ion exchange resins contain organic complexing agents.

3. The method according to claim 1 or 2, **characterized in that** the reaction mixture comprises water and spent ion exchange resin in a volume ratio of 3 : 1 to 1.5 : 1, preferably of 2.5 : 1 to 2 : 1, and particularly preferably of 2 : 1.

4. The method according to any of the preceding claims, **characterized in that** the temperature of the reaction mixture is maintained in a range from 60 to 90 °C, preferably from 70 to 85 °C, and particularly preferably in a range from 70 to 80 °C.

5. The method according to any of the preceding claims, **characterized in that** the pH of the reaction mixture is set and controlled by the addition of a mineral acid, preferably sulfuric acid or nitric acid, or a base, preferably an alkali hydroxide or an alkaline earth hydroxide.

6. The method according to any of the preceding claims, **characterized in that** the oxidant is an aqueous solution of hydrogen peroxide at a concentration of 30 to 35 weight percent.

7. The method according to any of the preceding claims, **characterized in that** hydrogen peroxide is added to the reaction mixture so that the concentration of hydrogen peroxide in the reaction mixture is at least 20,000 ppm.

8. The method according to any of the preceding claims, **characterized in that** no antifoaming agent is added to the reaction mixture.

9. The method according to any of the preceding claims, **characterized in that** the addition of the oxidant is terminated and the electrochemical oxidation is started when the aqueous reaction solution becomes a clear and transparent solution.

10. The method according to any of the preceding claims, **characterized in that** the electrochemical oxidation is performed at a voltage of 5 V or less.

11. The method according to any of the preceding claims, **characterized in that**, prior to the electrochemical oxidation, water from the reaction mixture and/or the aqueous reaction solution is removed from the reaction vessel by means of vacuum distillation.

12. The method according to claim 11, **characterized in that** the water removed by vacuum distillation is purified by means of reverse osmosis to obtain volatile organic substances, and the volatile organic substances are returned to the reaction mixture and/or the aqueous reaction solution.

13. An apparatus for conditioning of spent ion exchange resins, comprising
- a reaction vessel (10) for accommodation of the spent ion exchange resins and water;
- an oxidant supply (22) that is connected to the reaction vessel (10);
- a vacuum distillation unit (24) comprising a spray column (26) that is connected to the reaction vessel (10) and a condenser (28); and
- a unit for electrochemical oxidation (36) that is arranged within the reaction vessel (10) or connected to it, with the unit for electrochemical oxidation (36) having a boron-doped diamond electrode (40).

14. The apparatus according to claim 13, **characterized in that** the condenser (28) is connected to a reverse osmosis unit (34).

15. The apparatus according to claim 13 or 14, **characterized in that** the unit for electrochemical oxidation (36) comprises a reactor (38) and a boron-doped diamond electrode (40), wherein the reactor (38) is connected to the reaction vessel (10) and the boron-doped diamond electrode (40) is arranged in the reactor (38).

## Revendications

1. Procédé de conditionnement de résines échangeuses d'ions usées provenant d'installations nucléaires, comprenant les étapes suivantes :
- le mélange des résines échangeuses d'ions usées avec de l'eau de manière à former un mélange réactionnel ;
- l'ajustage et la surveillance de la valeur pH du mélange réactionnel dans une plage comprise entre 1,0 et 3,5, de préférence dans une plage comprise entre 2,0 et 3,0 ;
- l'ajout d'un agent d'oxydation, de préférence d'une solution aqueuse de peroxyde d'hydrogène, au mélange réactionnel, la température du mélange réactionnel étant maintenue à 90°C ou moins, de préférence à 85°C ou moins, de sorte que la résine échangeuse d'ions usée et l'agent d'oxydation réagissent l'une avec l'autre de manière à former une solution réactionnelle aqueuse qui comprend des produits réactionnels organiques de la résine échangeuse d'ions usée ; et ensuite
- l'oxydation électrochimique des produits réactionnels organiques dans la solution réactionnelle au moyen d'une électrode en diamant dotée au bore (40), du dioxyde de carbone étant formé, et une solution réactionnelle aqueuse appauvrie en carbone présentant une valeur COT (teneur totale en carbone organique) inférieure à 50 ppm étant obtenue.

2. Procédé selon la revendication 1, **caractérisé en ce que** les résines échangeuses d'ions contiennent des agents complexants organiques.

3. Procédé selon la revendication 1 ou 2, **caractérisé en ce que** le mélange réactionnel comprend de l'eau et de la résine échangeuse d'ions usée selon un rapport volumique de 3:1 à 1,5:1, de préférence de 2,5:1 à 2:1, et de manière particulièrement préférée de 2:1.

4. Procédé selon l'une des revendications précédentes, **caractérisé en ce que** la température du mélange réactionnel est maintenue dans une plage comprise entre 60 et 90°C, de préférence comprise entre 70 et 85°C, et de manière particulièrement préférée dans une plage comprise entre 70 et 80°C.

5. Procédé selon l'une des revendications précédentes, **caractérisé en ce que** la valeur pH du mélange réactionnel est ajustée et contrôlée par l'ajout d'un acide minéral, de préférence d'acide sulfurique ou d'acide azotique, ou d'une base, de préférence d'un alcali caustique ou d'un hydroxyde alcalino-terreux.

6. Procédé selon l'une des revendications précédentes, **caractérisé en ce que** l'agent d'oxydation est une solution aqueuse de peroxyde d'hydrogène dans une concentration de 30 à 35 pour cent en poids.

7. Procédé selon l'une des revendications précédentes, **caractérisé en ce que** le peroxyde d'hydrogène est ajouté au mélange réactionnel de sorte que la concentration de peroxyde d'hydrogène dans le mélange réactionnel est d'au moins 20.000 ppm.

8. Procédé selon l'une des revendications précédentes, **caractérisé en ce qu'**un inhibiteur de mousse n'est pas ajouté au mélange réactionnel.

9. Procédé selon l'une des revendications précédentes, **caractérisé en ce que** l'ajout de l'agent d'oxydation est terminé et l'oxydation électrochimique est débutée lorsque la solution réactionnelle aqueuse est une solution claire et transparente.

10. Procédé selon l'une des revendications précédentes, **caractérisé en ce que** l'oxydation électrochimique est réalisée à une tension de 5 V ou moins.

11. Procédé selon l'une des revendications précédentes, **caractérisé en ce qu'**avant l'oxydation électrochimique, de l'eau du mélange réactionnel et/ou de la solution réactionnelle aqueuse est extraite du récipient de réaction par distillation dans le vide.

12. Procédé selon la revendication 11, **caractérisé en ce que** l'eau extraite par distillation dans le vide est purifiée par osmose inverse de manière à obtenir des substances organiques volatiles, et **en ce que** les substances organiques volatiles sont de nouveau ajoutées au mélange réactionnel et/ou à la solution réactionnelle aqueuse.

13. Dispositif de conditionnement de résines échangeuses d'ions usées, comprenant
- un récipient de réaction (10) pour la réception des résines échangeuses d'ions usées et d'eau ;
- une amenée d'agent d'oxydation (22) raccordée au récipient de réaction (10) ;
- une unité de distillation dans le vide (24) comprenant une colonne de pulvérisation (26) qui est raccordée au récipient de réaction (10) et à un condenseur (28), et
- une unité d'oxydation électrochimique (36) qui est agencée à l'intérieur du récipient de réaction (10) ou qui est raccordée à celui-ci, l'unité d'oxydation électrochimique (36) présentant une électrode en diamant dotée au bore (40).

14. Dispositif selon la revendication 13, **caractérisé en ce que** le condenseur (28) est raccordé à une unité d'osmose inverse (34).

15. Dispositif selon la revendication 13 ou 14, **caractérisé en ce que** l'unité d'oxydation électrochimique (36) comprend un réacteur (38) et une électrode en diamant dotée au bore (40), le réacteur (38) étant raccordé au récipient de réaction (10), et l'électrode en diamant dotée au bore (40) étant agencée dans le réacteur (38).
